# EUROPEAN PATENT APPLICATION

(11) **EP 4 629 477 A1**
(43) Date of publication of application: **08.10.2025**
(21) Application number: 23895838.3
(22) Date of filing: 28.04.2023
(51) Int. Cl.: H02J 15/00, H01M 10/42, H04L 12/40, H02J 7/00

(54) **COMMUNICATION CONNECTOR, AND ENERGY STORAGE BATTERY SYSTEM AND TERMINAL RESISTOR MATCHING METHOD THEREFOR**

(30) Priority: 29.11.2022 CN 202211506878
(71) Applicant: Sungrow Power Supply Co., Ltd., Hefei, Anhui 230088 (CN)
(72) Inventor: CHEN, Qiangdong, Hefei, Anhui 230088 (CN); CHEN, Fei, Hefei, Anhui 230088 (CN); LI, Xuteng, Hefei, Anhui 230088 (CN); DONG, Wengong, Hefei, Anhui 230088 (CN)
(74) Representative: Epping - Hermann - Fischer
(86) International application number: PCT/CN2023/091638
(87) International publication number: WO 2024/113672

(57) **Abstract**

The present application provides a communication connector, and an energy storage battery system and a terminal resistor matching method therefor. Upon detecting that the input ends of communication connectors are connected to corresponding battery clusters, one communication connector controls the next communication connector in a linkage mode to enable the next communication connector to be disconnected from a terminal resistor of a corresponding battery cluster, and the arrangement sequence of the communication connectors is the same as the sequence that the input ends of the communication connectors are connected to the corresponding battery clusters, and therefore, when a plurality of battery clusters in an energy storage battery system all establish communication with a PCS, the terminal resistors of other battery clusters than a battery cluster corresponding to a first communication connector are disconnected, so that the normal communication between the energy storage battery system and the PCS is ensured. Additionally, since a residential energy storage battery system is also an energy storage battery system, the communication method of the energy storage battery system provided by the present application can ensure the normal communication between the residential energy storage battery system and a PCS when a plurality of battery clusters in the residential energy storage battery system all establish communication with the PCS.

## Description

This application claims the priority to Chinese patent application No. 202211506878.3, titled as "COMMUNICATION CONNECTOR, ENERGY STORAGE BATTERY SYSTEM, AND METHOD FOR PERFORMING TERMINAL-RESISTANCE MATCHING IN ENERGY STORAGE BATTERY SYSTEM", filed on November 29, 2022, with the China National Intellectual Property Administration, which is incorporated herein by reference in its entirety.

### FIELD

The present disclosure relates to the technical field of power electronics, and in particular to a communication connector, a battery energy storage system, and a method for performing terminal-resistance matching in the battery energy storage system.

### BACKGROUND

Users may store excess power generated by a household photovoltaic power system as backup for emergencies or provide the excess power to a power grid during price peak hours for benefits. Hence, there is a demand for more energy storage, and the demand boosts development of household battery energy storage systems.

Generally, the household battery energy storage system communicates with a power conversion system (PCS) via a controller area network (CAN) bus, that is, battery cluster(s) in the household battery energy storage system are connected to the CAN bus to communicate with the PCS. Each battery cluster in the household battery energy storage system may have a termination resistor. When multiple battery clusters in the household battery energy storage system are connected to the communication bus, that is, when they establish communication with the PCS, their termination resistors are connected in parallel, which decreases terminal resistance for the CAN bus. Hence, a level of communication signals on the CAN bus is decreased, falling and the rising edges of the communication signal is subject to a slow ramp, and communication between the household battery energy storage system and the PCS is apt to suffer from abnormalities.

Thus, an urgent issue to be addressed is how to ensure normal communication between the household battery energy storage system and the PCS when the multiple battery clusters establish communication with the PCS.

### SUMMARY

A communication connector, a battery energy storage system, and a method for performing terminal-resistance matching in a battery energy storage system are provided according to embodiments of the present disclosure. Normal communication is ensured between the household battery energy storage system and a power conversion system (PCS) when multiple battery clusters in the household battery energy storage system establish communication with the PCS.

Following technical solutions are provided according to embodiments of the present disclosure.

In a first aspect, a method for performing terminal-resistance matching in a battery energy storage system is provided according to embodiments of the present disclosure. The method is applicable to a communication connector in the battery energy storage system. The method comprises: determining whether an input terminal of the communication connector is connected to a battery cluster in the battery energy storage system; and controlling a next communication connector, which is immediately subsequent to the communication connector in a sequence of communication connectors, to be in a state for switching out a termination resistor of another battery cluster, in response to the input terminal of the communication connector being connected to the battery cluster. The sequence of communication connectors represents a sequence of connecting input terminals of the communication connectors to the respective battery clusters.

In an embodiment, the next communication connector comprises a transfer switch configured for connecting in series with the termination resistor of the another battery cluster. Controlling the next communication connector to be in the state for switching out the termination resistor of the another battery cluster comprises: switching the transfer switch from a normally closed state to a normally open state.

In an embodiment, the method further comprises: controlling the next communication connector to be in a state for keeping the termination resistor of the another battery cluster electrically coupling to the next communication connector, in response to the input terminal of the communication connector being not connected to the battery cluster.

In an embodiment, the input terminal of the communication connector is a socket, and a communication terminal of the battery cluster is a plug. Determining whether the input terminal of the communication connector is connected to the battery cluster comprises: determining whether the plug is inserted into the socket; and determining that the input terminal of the communication connector is connected to the battery cluster, when the plug is inserted into the socket.

In a second aspect, a communication connector is provided according to embodiments of the present disclosure. The communication connector comprises a transfer switch, an interlock device, and two communication lines. A positive end of an input terminal of the communication connector is connected to a positive end of an output terminal of the communication connector via a positive communication line of the two communication lines, and a negative end of the input terminal is connected to a negative end of the output terminal via a negative communication line of the two communication lines. The transfer switch is configured for connecting in series with a termination resistor of a battery cluster in the battery energy storage system. The interlock device is configured for performing the method according to any embodiment of the first aspect.

In an embodiment, the interlock device comprises one or both of an electronic circuit and a mechanical mechanism.

In an embodiment, the transfer switch is a mechanically controllable switch or an electronically controllable switch.

In a third aspect, a battery energy storage system is provided according to an embodiment of the present disclosure. The battery energy storage system comprises: at least two battery clusters; and at least two communication connectors, each of which is the communication connector according to an embodiment of the second aspect. The input terminal of each communication connector is connected to a communication terminal of a respective battery cluster among the at least two battery clusters, and the output terminal of each communication connector is connected to a communication terminal of a PCS via a communication bus.

In an embodiment, the termination resistor of the respective battery cluster connected to a communication connector of the at least two communication connectors comprises two resistors having equal resistance. A terminal of a first resistor of the two resistors is connected to a positive end of the communication terminal of the battery cluster, and another terminal of the first resistor is connected to a terminal of the transfer switch of the communication connector. A terminal of a second resistor of the two resistors is connected to another terminal of the transfer switch of the communication connector, and another terminal of the second resistor is connected to a negative end of the communication terminal of the battery cluster.

In an embodiment, the battery energy storage system further comprises the PCS.

Herein the method for performing terminal-resistance matching in the battery energy storage system is provided and applicable to the communication connector in the battery energy storage system. When it is determined that the input terminal of the communication connector is connected to its corresponding battery cluster, the communication connector controls the next communication connector to be in the state for switching out the termination resistor of the battery cluster corresponding to the next communication connector. The sequence of communication connectors represents the sequence in which the input terminals of the communication connectors are connected to their corresponding battery clusters, respectively. When multiple battery clusters in the battery energy storage system establish communication with the PCS, the termination resistors of all battery clusters, except the one corresponding to the foremost communication connect in the sequence, would be switched out. That is, the termination resistor of only one battery cluster is electrically coupled to the communication bus, which ensures normal communication between the battery energy storage system and the PCS. In addition, the household battery energy storage system is a kind of a battery energy storage system, and hence the above method can also ensure normal communication between the household battery energy storage system and the PCS when multiple battery clusters in the household battery energy storage system establish communication with the PCS.

### BRIEF DESCRIPTION OF THE DRAWINGS

Hereinafter drawings to be applied in embodiments of the present disclosure or in related art are briefly described, in order to clarify illustration of technical solutions according to embodiments of the present disclosure or in related art. Apparently, the drawings in the following descriptions are only some embodiments of the present disclosure, and other drawings may be obtained by those skilled in the art based on the provided drawings without exerting creative efforts.
FIG. 1 is a schematic flowchart of a method for performing terminal-resistance matching in a battery energy storage system according to an embodiment of the present disclosure.
FIG. 2 is a schematic flowchart of a method for performing terminal-resistance matching in a battery energy storage system according to another embodiment of the present disclosure.
FIG. 3 is a schematic flowchart of a method for performing terminal-resistance matching in a battery energy storage system according to another embodiment of the present disclosure.
FIG. 4 is a schematic flowchart of a method for performing terminal-resistance matching in a battery energy storage system according to another embodiment of the present disclosure.
FIG. 5 is a schematic structural diagram of a communication connector according to an embodiment of the present disclosure;
FIG. 6 is a schematic structural diagram of a battery energy storage system according to an embodiment of the present disclosure.
FIG. 7 is a schematic structural diagram of a battery energy storage system according to another embodiment of the present disclosure.

### DETAILED DESCRIPTION

Hereinafter technical solutions in embodiments of the present disclosure are described clearly and completely in conjunction with the drawings in embodiments of the present closure. Apparently, the described embodiments are only some rather than all embodiments of the present disclosure. Any other embodiments obtained based on the embodiments of the present disclosure by those skilled in the art without any creative effort fall within the scope of protection of the present disclosure.

The relationship terms such as "first", "second" and the like are only used herein to distinguish one entity or operation from another, rather than to necessitate or imply that an actual relationship or order exists between the entities or operations. Furthermore, the terms such as "include", "comprise" or any other variants thereof means to be non-exclusive. Therefore, a process, a method, an article, or a device including a series of elements include not only the disclosed elements but also other elements that are not clearly enumerated, or further include inherent elements of the process, the method, the article, or the device. Unless expressively limited, the statement "including a..." does not exclude the case that other similar elements may exist in the process, the method, the article, or the device other than enumerated elements.

A method for performing terminal-resistance matching in a battery energy storage system is provided according to embodiments of the present disclosure. Normal communication is ensured between a household battery energy storage system and a power conversion system (PCS) when multiple battery clusters in the household battery energy storage system establish communication with the PCS. The method is applicable to a communication connector in the battery energy storage system.

The battery energy storage system comprises at least two battery clusters and at least two communication connectors, and a termination resistor is connected between two ends of a communication terminal of each battery cluster. An input terminal of each communication connector is connected to a respective battery cluster, that is, the input terminal of each communication connector is connected to the communication terminal of such battery cluster. Moreover, each communication connector is connected to a communication bus via its output terminal, such that it can establish communication with the PCS. That is, the output terminals of the communication connectors are all connected to a communication terminal of the PCS via the communication bus.

In an embodiment, the communication bus is a controller area network (CAN) bus. The present disclosure is not limited to the above example. In practice, a type of the communication bus may depend on a specific situation, and all types are within a scope of the present disclosure.

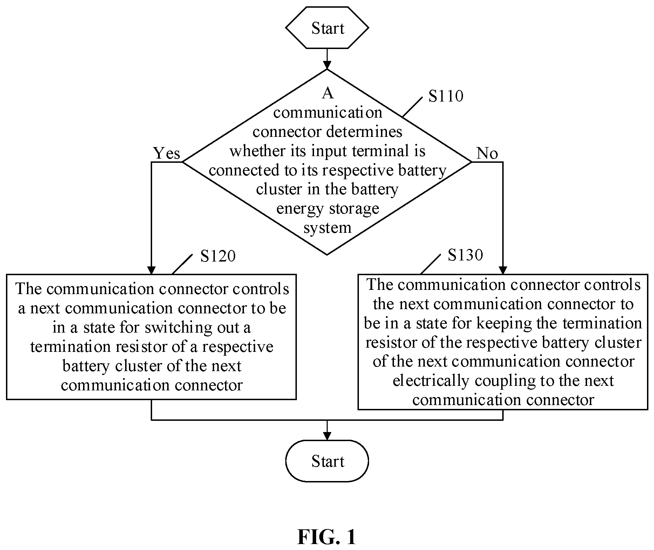

FIG. 1 shows a process of the method for performing terminal-resistance matching. The method may comprise following steps S110 to S130.

In step S110, the communication connector determines whether its input terminal is connected to its respective battery cluster in the battery energy storage system.

The process goes to step S120 in a case of positive determination and goes to step S130 in a case of negative determination.

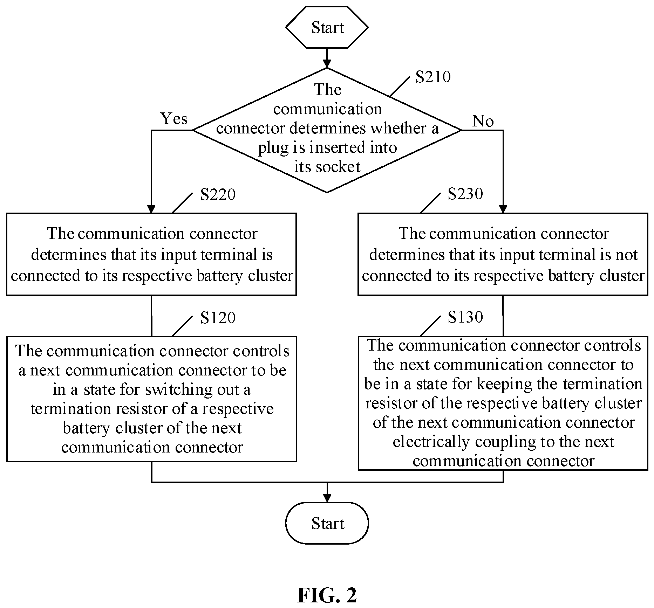

In an embodiment, the input terminal of the communication connector is a socket, and a communication terminal of the battery cluster is a plug. Reference is made to FIG. 2, where step S110 may comprise steps S210 to S230.

In step S210, the communication connector determines whether the plug is inserted into its socket.

The process goes to step S220 in a case of positive determination and goes to step S230 in a case of negative determination.

In step S220, the communication connector determines that its input terminal is connected to its respective battery cluster.

In step S230, the communication connector determines that its input terminal is not connected to its respective battery cluster.

The above embodiment is an example of implementing step S110. The present disclosure is not limited to the above example. In practice, a manner of implementing step S110 may depend on a specific situation, and all manners are within a scope of the present disclosure.

In step S120, the communication connector controls a communication connector that is immediately subsequent to the communication connector in a sequence of communication connectors (hereinafter the next communication connector) to be in a state for switching out (i.e., decoupling electrically from the communication bus) a termination resistor of a respective battery cluster for the next communication connector.

As an example, the battery energy storage system comprises three communication connectors. In the sequence, the next communication connector of the 1^{st} communication connector is the 2^{nd} communication connector, and the next communication connector of the 2^{nd} communication connector is the 3^{rd} communication connector.

The sequence of communication connectors represents a sequence in which the input terminals of the communication connectors are connected to their respective battery clusters. As in the above example, the battery energy storage system comprises three communication connectors, the input terminal of the 1^{st} communication connector is first connected to its corresponding battery cluster, then the input terminal of the 2^{nd} communication connector is connected to its corresponding battery cluster, and finally the input terminal of the 3^{rd} communication connector is connected to its corresponding battery cluster.

In an embodiment, a communication connector comprises a transfer switch, and the transfer switch is configured for connecting in series with the termination resistor of the respective battery cluster for such communication connector. Step S120 may be implemented as follows.

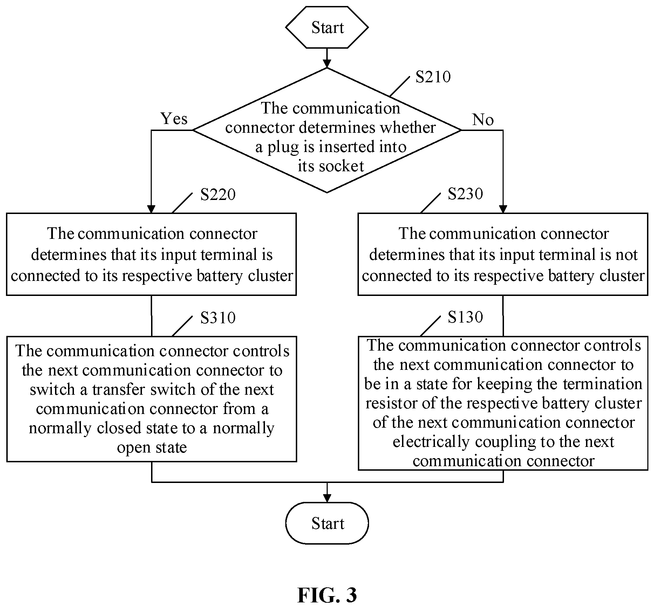

As shown in FIG. 3, step S120 comprises step S310.

In step S310, the communication connector controls the next communication connector to switch the transfer switch of the next communication connector from a normally closed state to a normally open state.

In practice, a default state of the transfer switch may be the normally closed state. That is, by default, the termination resistor of the corresponding battery cluster can be electrically coupled to the communication bus.

Since the transfer switch is connected in series with the termination resistor, the termination resistor would not be electrically coupled to the battery cluster when the transfer switch is switched from the normally closed state to the normally open state. Thus, the termination resistor of the battery cluster is switched out (or cut out) from the communication bus.

In step S130, the next communication connector is controlled to be in a state for keeping the termination resistor of the respective battery cluster for the next communication connector electrically coupling to the next communication connector.

In an embodiment, a communication connector comprises a transfer switch, and the transfer switch is configured for connecting in series with the termination resistor of the respective battery cluster for such communication connector. The default state of the transfer switch is the normally closed state. Step S130 may be implemented as follows.

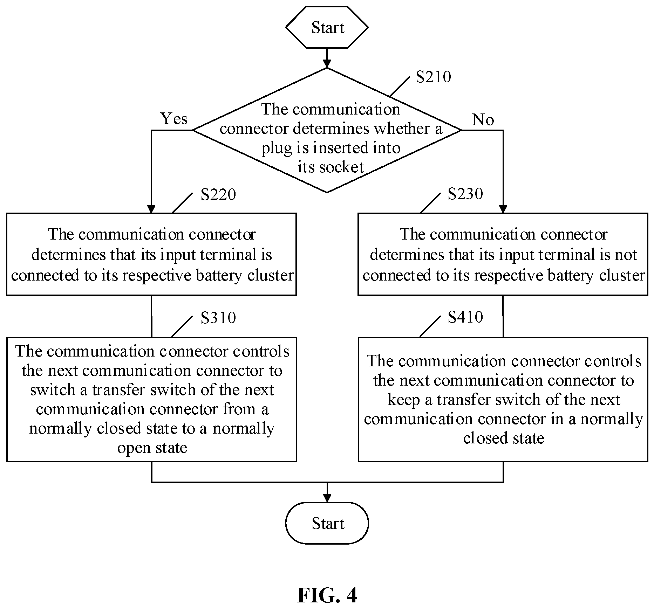

As shown in FIG. 4, step S130 comprises step S410.

In step S410, the communication connector controls the next communication connector to keep the transfer switch of the next communication connector in the normally closed state.

Since the transfer switch is connected in series with the termination resistor, electrical coupling between the termination resistor and the battery cluster is not interrupted when the transfer switch keeps the normally closed state. Thus, the termination resistor of the battery cluster can be electrically coupled to the communication bus.

The communication connector is interlocked with the next communication connector. When detecting that its input terminal is connected to the respective battery cluster, the communication connector controls the next communication connector in the sequence of communication connectors to be in the state for switching out the termination resistor of the respective battery cluster for the next communication connector. The sequence of the communication connectors represents the sequence in which the input terminals of the communication connectors are connected to their corresponding battery clusters, respectively. Hence, when the multiple battery clusters in the battery energy storage system establish communication with the PCS, the termination resistors of all battery clusters except the one corresponding to the 1^{st} communication connector in the sequence are switched out. That is, the termination resistor of only one battery cluster is electrically coupled to the communication bus, which ensures normal communication between the battery energy storage system and the PCS. In addition, the household battery energy storage system is a kind of a battery energy storage system, and hence the above method can also ensure normal communication between the household battery energy storage system and the PCS when multiple battery clusters in the household battery energy storage system establish communication with the PCS.

In related art, when a PCS establishes communication with multiple battery clusters in a battery energy storage system, the termination resistor(s) of the corresponding battery cluster(s) needs to be removed by operating personnel to ensure normal communication, which increases human labor. As an alternative, when the PCS establishes communication with the multiple battery clusters in the battery energy storage system, a dip switch may be provided for switching out the termination resistor(s) of the corresponding battery cluster(s). A protection level of the dip switch does not reach the IP54 level, and hence it reduces a protection level of the whole battery energy storage system. The dip switch also results in difficult on-site operations and a high cost of the battery energy storage system.

The method provided herein can perform the terminal-resistance matching for the communication bus automatically no matter whether the PCS establishes communication with only one battery cluster in the battery energy storage system or the PCS establishes communication with multiple battery clusters in the battery energy storage system. In comparison with related art, manual removal of the termination resistor of the battery cluster or switching out the termination resistor of the battery cluster through operating the dip switch are avoided.

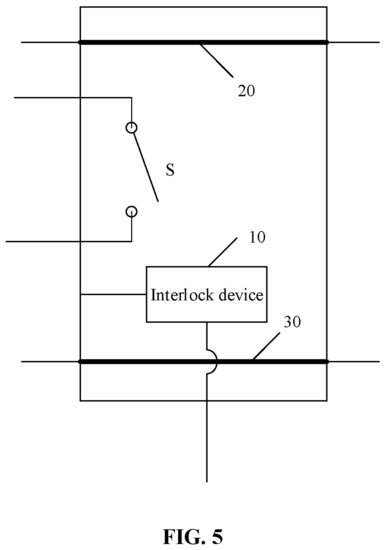

A communication connector is provided according to another embodiment of the present disclosure. FIG. 5 shows a structure of the communication connector. The communication connector comprises a transfer switch S, an interlock device 10, and two communication lines. Connection among the above components are as follows.

A positive end of an input terminal of the communication connector is connected to a positive end of an output terminal of the communication connector via a positive communication line 20. A negative end of the input terminal of the communication connector is connected to a negative end of the output terminal of the communication connector via a negative communication line 30.

The transfer switch S is configured for connecting in series with a termination resistor of a battery cluster in a battery energy storage system. The termination resistor is connected between two ends of a communication terminal of the battery cluster. Recommended resistance of the termination resistor may be 120Ω on a basis of the ISO11898-2 standard.

A first terminal of the interlock device 10 is connected to the transfer switch S of the next communication connector in the sequence of communication transistors. The interlock device 10 is configured for performing the method for performing the terminal-resistance matching described in any foregoing embodiment. A second terminal of the interlock device 10 may be configured using a common technique in related art. FIG. 5 only illustrates the second terminal of the interlock device 10 schematically.

In practice, the interlock device 10 may comprise an electronic circuit, a mechanical mechanism, or both. The present disclosure is not limited to the above examples, and a structure of the interlock device 10 may depend on a specific situation in practice. All structures fall within the scope of the present disclosure. The interlock device 10 comprising the mechanical mechanism can improve reliability of the automatic terminal-resistance matching of the battery energy storage system for the communication bus. Thus, it is preferable that the interlock device 10 comprises the mechanical mechanism.

In an embodiment, the interlock device 10 comprises the electronic circuit, and the transfer switch S is an electronically controllable switch, such as a metal-oxide-semiconductor transistor. In an embodiment, the interlock device 10 comprises the mechanical mechanism, and the transfer switch S is a mechanically controllable switch. In an embodiment, the interlock device 10 comprises the electronic circuit and the mechanical mechanism, and a type of the transfer switch S depends on whether the state of the transfer switch S is switched ultimately by an electrical signal or by a mechanical action. The present disclosure is not limited to the above examples, and the type of the transfer switch S may depend on a specific situation in practice. All types fall within the scope of the present disclosure.

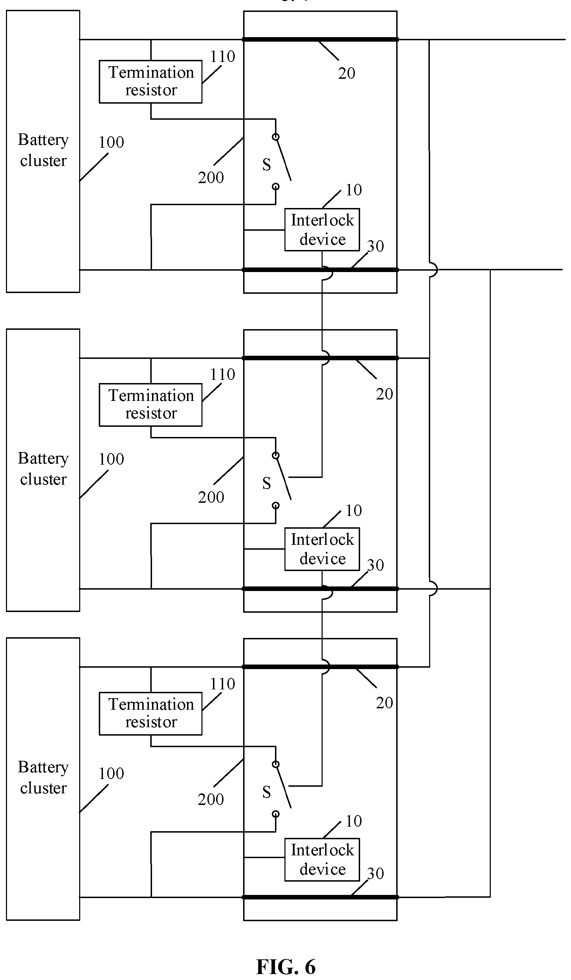

A battery energy storage system is provided according to another embodiment of the present disclosure. A structure of the battery energy storage system may refer to FIG. 6. The battery energy storage system comprises at least two battery clusters 100 (as an example, only three battery clusters 100 are shown in FIG. 6) and at least two communication connectors 200 (as an example, only three communication connectors 200 are shown in FIG. 6). Each communication connector 200 is the communication connector according to any foregoing embodiment.

A quantity of the communication connectors 200 may be equal to a quantity of the battery clusters 100. That is, each battery cluster 100 may establish communication with the PCS. Alternatively, the quantity of the communication connectors 200 may be smaller than the quantity of the battery clusters 100. That is, a part of the battery clusters 100 may establish communication with the PCS. In practice, the quantity of the communication connectors 200 may be determined according to a user's demand on power storage capacitance, which is not limited here.

Connection among the above devices is as follows.

An input terminal of each communication connector 200 is connected to a communication terminal of a respective battery cluster 100 for such communication connector 200. In an embodiment, a positive end of the input terminal of each communication connector 200 is connected to a positive end of the communication terminal of its respective battery cluster 100, and a negative end of the input terminal of each communication connector 200 is connected to the negative end of the communication terminal of its respective battery cluster 100.

An output terminal of each communication connector 200 is connected to a communication terminal of the PCS via the communication bus. In an embodiment, a positive end of the output terminal of each communication connector 200 is connected to a positive end of the communication terminal of the PCS via a positive communication bus, and a negative end of the output terminal of each communication connector 200 is connected to a negative end of the communication terminal of the PCS via a negative end communication bus.

Details of the connection between the termination resistor 110 of the battery cluster 100 and the corresponding communication connector 200 have been described in the foregoing embodiments and are not repeated here.

In another embodiment, the connection among the devices is identical to the above embodiment except that the PCS is integrated into the battery energy storage system.

The present disclosure is not limited to the above two examples of the battery energy storage system. A specific structure of the battery energy storage system may depend on a specific situation, and all such structures are within the scope of the present disclosure.

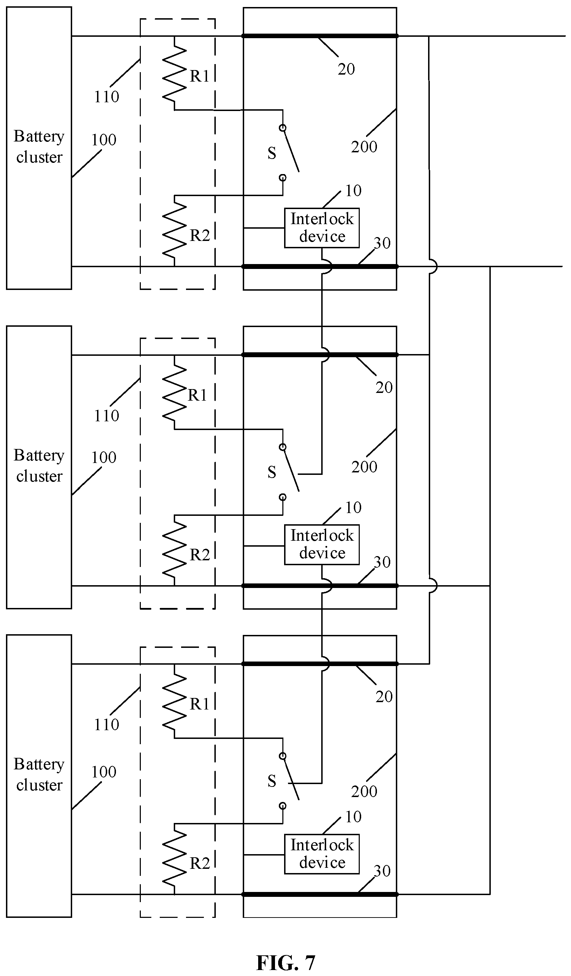

The termination resistor 110 of the battery cluster 100 may be configured otherwise. Reference is made to FIG. 7, which is modified on the basis of FIG. 6. In an embodiment, the termination resistor comprises two resistors having equal resistance. Connection among the components is as follows.

A terminal of a first resistor R1 is connected to a positive end of the communication terminal of the battery cluster 100. Another terminal of the first resistor R1 is connected to a terminal of the transfer switch S in the communication connector 200 corresponding to such battery cluster 100.

A terminal of a second resistor R2 is connected to another terminal of the transfer switch S in the communication connector 200 corresponding to such battery cluster 100. Another terminal of the second resistor R2 is connected to a negative end of the communication terminal of the battery cluster 100.

The above example is only one of preferable embodiments of the termination resistor 110. The present disclosure is not limited to the above example. In practice, the termination resistor may be configured otherwise. For example, the termination resistor 110 comprises at least two resistors, all of which are connected in series with the transfer switch S in the corresponding communication connector 200. A specific configuration of the termination resistor may depend on a specific situation, and all configurations are within the scope of the present disclosure.

Hereinafter the battery energy storage system as shown in FIG. 7 is taken as an example for illustrating a process of establishing communication between each battery cluster 100 in the battery energy storage system and the PCS. It is assumed that the three communication connectors 200 are a first communication connector, a second communication connector, and a third communication connector, which are sequenced as listed above from top to bottom in FIG. 7. It is further assumed that the input terminal of each communication connector is a socket and the communication terminal of each battery cluster 100 a plug.

When the plug of the battery cluster 100 corresponding to the first communication connector is inserted into the socket of the first communication connector, the interlock device 10 in the first communication connector is triggered to switch the transfer switch S in the second communication connector from the normally closed state to the normally open state. The transfer switch S in the first communication connector is kept in the normally closed state because it cannot be triggered, and the termination resistor 110 of the battery cluster 100 connected to the first communication connector is electrically coupled to the communication bus.

When the plug of the battery cluster 100 corresponding to the second communication connector is inserted into the socket of the second communication connector, the interlock device 10 in the second communication connector is triggered to switch the transfer switch S in the third communication connector from the normally closed state to the normally open state. At such time, the transfer switch S in the second communication connector has already been switched to the normally open state, and hence the termination resistor 110 of the battery cluster 100 connected to the second communication connector is switched out (or cut out) from the communication bus.

When the plug of the battery cluster 100 corresponding to the third communication connector is inserted into the socket of the third communication connector, the interlock device 10 in the third communication connector is triggered. Since the third communication connector is the last one in the sequence, the interlock device 10 in the third communication connector has no transfer switch of a next communication connector to trigger. At such time, the transfer switch S in the third communication connector has already been switched to the normally open state, and hence the termination resistor 110 of the battery cluster 100 connected to the third communication connector is switched out (or cut out) from the communication bus.

Therefore, the battery energy storage system ensures that the termination resistor 110 of only one battery cluster 100 is electrically coupled to the communication bus when the PCS establishes communication with the multiple battery clusters 100. Normal communication between the battery energy storage system and the PCS is ensured.

On a basis the above description, the features illustrated in the various embodiments may be inter-replaced or combined with each other to enable those skilled in the art to implement or use the present disclosure. The foregoing embodiments are only preferred embodiments of the present disclosure, and do not limit the present disclosure in any form. The preferred embodiments according to the disclosure are disclosed above and are not intended to limit the present disclosure. With the method and technical content disclosed above, those skilled in the art can make some variations and improvements to the technical solutions of the present disclosure or make some equivalent variations on the embodiments without departing from the scope of technical solutions of the present disclosure. All simple modifications, equivalent variations and improvements made based on the technical essence of the present disclosure without departing the content of the technical solutions of the present disclosure fall within the protection scope of the technical solutions of the present disclosure.

## Claims

1. A method for performing terminal-resistance matching in a battery energy storage system, applicable to a communication connector in the battery energy storage system, **characterized in that** the method comprises:
determining whether an input terminal of the communication connector is connected to a battery cluster in the battery energy storage system; and
controlling a next communication connector, which is immediately subsequent to the communication connector in a sequence of communication connectors, to be in a state for switching out a termination resistor of another battery cluster, in response to the input terminal of the communication connector being connected to the battery cluster;
wherein the sequence of communication connectors represents a sequence of connecting input terminals of the communication connectors to the respective battery clusters.

2. The method according to claim 1, **characterized in that**:
the next communication connector comprises a transfer switch configured for connecting in series with the termination resistor of the another battery cluster; and
controlling the next communication connector to be in the state for switching out the termination resistor of the another battery cluster comprises: switching the transfer switch from a normally closed state to a normally open state.

3. The method according to claim 1, **characterized by** further comprising:
controlling the next communication connector to be in a state for keeping the termination resistor of the another battery cluster electrically coupling to the next communication connector, in response to the input terminal of the communication connector being not connected to the battery cluster.

4. The method according to any one of claims 1 to 3, **characterized in that**:
the input terminal of the communication connector is a socket, and a communication terminal of the battery cluster is a plug; and
determining whether the input terminal of the communication connector is connected to the battery cluster comprises:
determining whether the plug is inserted into the socket; and
determining that the input terminal of the communication connector is connected to the battery cluster, when the plug is inserted into the socket.

5. A communication connector, **characterized by** comprising:
a transfer switch,
an interlock device, and
two communication lines, wherein:
a positive end of an input terminal of the communication connector is connected to a positive end of an output terminal of the communication connector via a positive communication line of the two communication lines;
a negative end of the input terminal is connected to a negative end of the output terminal via a negative communication line of the two communication lines;
the transfer switch is configured for connecting in series with a termination resistor of a battery cluster in the battery energy storage system; and
the interlock device is configured for performing the method according to any one of claims 1 to 4.

6. The communication connector according to claim 5, **characterized in that** the interlock device comprises one or both of an electronic circuit and a mechanical mechanism.

7. The communication connector according to claim 5, **characterized in that** the transfer switch is a mechanically controllable switch or an electronically controllable switch.

8. A battery energy storage system, **characterized by** comprising:
at least two battery clusters, and
at least two communication connectors, each of which is the communication connector according to any one of claims 5 to 7,
wherein the input terminal of each communication connector is connected to a communication terminal of a respective battery cluster among the at least two battery clusters, and the output terminal of each communication connector is connected to a communication terminal of a PCS via a communication bus.

9. The battery energy storage system according to claim 8, **characterized in that**:
the termination resistor of the respective battery cluster connected to a communication connector of the at least two communication connectors comprises two resistors having equal resistance;
a terminal of a first resistor of the two resistors is connected to a positive end of the communication terminal of the battery cluster, and another terminal of the first resistor is connected to a terminal of the transfer switch of the communication connector; and
a terminal of a second resistor of the two resistors is connected to another terminal of the transfer switch of the communication connector, and another terminal of the second resistor is connected to a negative end of the communication terminal of the battery cluster.

10. The battery energy storage system according to claim 8 or 9, **characterized in that** the battery energy storage system further comprises the PCS.
